# FASCICULE DE BREVET EUROPEEN

(11) **EP 3 055 193 B1**
(45) Date de publication et mention de la délivrance du brevet: **01.08.2018**
(21) Numéro de dépôt: 14793227.1
(22) Date de dépôt: 26.09.2014
(51) Int. Cl.: B62D 35/00, B62D 37/02

(54) **DISPOSITIF AÉRODYNAMIQUE D'UN VÉHICULE AUTOMOBILE**
AERODYNAMISCHE VORRICHTUNG EINES KRAFTFAHRZEUGS
AERODYNAMIC DEVICE OF A MOTOR VEHICLE

(30) Priorité: 07.10.2013 FR 1359679
(43) Date de publication de la demande: 17.08.2016
(73) Titulaire: Renault S.A.S., 92100 Boulogne-Billancourt (FR)
(72) Inventeur: HOLLEVILLE, Francis, F-78740 St Remy Les Chevreuse (FR)
(86) Numéro de dépôt international: PCT/FR2014/052432
(87) Numéro de publication internationale: WO 2015/052406

(56) Documents cités:
- DE-A1- 3 613 301
- FR-A1- 2 953 767
- JP-A- H08 192 774
- JP-A- 2007 191 085
- US-A1- 2011 148 143

## Description

### Domaine de l'invention :

La présente invention concerne un dispositif aérodynamique d'un véhicule automobile. L'invention se rapporte plus particulièrement à un dispositif aérodynamique situé à l'arrière du véhicule.

### Etat de la technique / problème technique :

Il est bien connu que l'aérodynamisme d'un véhicule automobile impacte directement sa consommation. Les constructeurs automobiles portent donc une attention particulière à optimiser les performances aérodynamiques des véhicules. Ceci passe par des formes profilées, des déflecteurs ou tout autre équipement favorisant la pénétration dans l'air de la carrosserie et/ou limitant les tourbillons. Ces considérations aérodynamiques sont cependant adaptées de façon à trouver un compromis acceptable avec d'autres impératifs d'un projet, à savoir le style du véhicule (design), son architecture (type, formes, habitabilité), ses contraintes diverses (liées à la fabrication, la sécurité etc. pour ne citer que ces exemples).

On a déjà expérimenté des déflecteurs aérodynamiques implantés sur des boucliers arrière de véhicule, pilotés en fonction de la vitesse.

Pour des raisons de style et d'esthétique, on cherche à éviter des formes trop rectangulaires et massives notamment de la partie arrière d'un véhicule (formes de type « fer à repasser »). Les constructeurs privilégient sur certains modèles un style profilé et fuselé, ayant des parties latérales se resserrant à l'arrière du véhicule. Ces parties latérales se resserrant derrière les roues arrière engendrent de nombreux tourbillons d'air qui dégradent significativement les performances aérodynamiques du véhicule.

Le document JP 2007 191085 A décrit un dispositif aérodynamique d'un véhicule automobile selon le préambule de la revendication 1.

### But de l'invention :

Le but de l'invention est de proposer un dispositif aérodynamique performant particulièrement adapté aux véhicules automobiles dont la carrosserie a une forme resserrée vers l'arrière suivant la direction transversale.

### Objet de l'invention :

A cet effet, l'invention a pour objet un dispositif aérodynamique d'un véhicule automobile, caractérisé en ce qu'il comprend un déflecteur situé sur une zone de carrosserie latérale et derrière une roue arrière du véhicule, le déflecteur étant mobile entre une position passive rétractée s'intégrant dans la zone de carrosserie et une position active déployée dans laquelle un bord arrière sensiblement vertical du déflecteur affleure un plan vertical longitudinal délimitant un flanc latéral extérieur de la roue.

Selon l'invention, le dispositif comprend des moyens pneumatiques pour commander le déplacement du déflecteur de sa position passive à sa position active, ce déplacement étant réalisé à l'encontre de moyens de rappel permettant de ramener le déflecteur dans la position passive ; on peut de ce fait mettre à profit de façon parfaitement intégrée et économique, des moyens pneumatiques déjà embarqués dans le véhicule automobile, par exemple des moyens de pilotage et de correction d'assiette pneumatiques, qui peuvent être prévus sur un véhicule dont on recherche une optimisation de tous les aspects aérodynamique. On sait en effet que l'assiette d'un véhicule est un paramètre important conditionnant la portance et l'aérodynamisme du véhicule. Le dispositif comprend aussi une chambre pneumatique fermée par un soufflet extensible, interposée entre la face intérieure du déflecteur et la zone de carrosserie. Dans la position passive, le déflecteur ou volet est parfaitement intégrée et affleurant avec la zone adjacente de la carrosserie de sorte qu'il n'est pas visible extérieurement à l'exception d'une découpe discrète pratiquée dans la carrosserie. Dans la position active, le déflecteur est déployé latéralement de sorte qu'un bord ou une arête arrière du déflecteur vienne affleurer un plan fictif vertical parallèle à la direction longitudinale avant-arrière du véhicule, ce plan étant en ce qu'il touche un flanc latéral extérieur de la roue. L'invention est décrite en relation avec l'une des roues arrière du véhicule étant entendu qu'elle s'applique des deux côtés du véhicule de façon symétrique.

Les moyens d'actionnement sont particulièrement simples et intégrés comme on le verra ci-après.

Selon d'autres caractéristiques avantageuses de l'invention :
- le déflecteur est au moins en majeure partie situé en dessous du niveau supérieur de la roue,
- le déflecteur est un élément plat allongé orienté verticalement, le déflecteur étant relié à la carrosserie et/ou à la structure du véhicule par des tiges de guidage reliées à la face intérieure du déflecteur, les tiges coulissant dans des évidements ménagés dans la zone de carrosserie,
- les tiges de guidage comportent des tiges avant et des tiges arrière, les courses des tiges arrière étant supérieures aux courses des tiges avant de sorte que le déflecteur pivote d'un angle déterminé,
- les moyens de rappel sont constitués de ressorts hélicoïdaux placés autour des tiges de guidage, chaque ressort coopérant en appui d'une part contre une paroi fixe de la carrosserie et/ou de la structure et d'autre part avec une collerette d'extrémité de la tige de guidage associée,
- les ressorts hélicoïdaux ont des spires jointives formant butées lorsque le déflecteur est dans la position active,
- le déflecteur a une section verticale déformable entre d'une part une forme incurvée correspondant à une forme convexe de la zone de carrosserie, et d'autre part une forme sensiblement plane de façon à présenter un bord arrière sensiblement rectiligne, ces formes correspondant respectivement aux positions passive et active du déflecteur, le soufflet ayant des conformations dont l'amplitude de déploiement est plus importante à au moins une extrémité supérieure et/ou inférieure du déflecteur, comparé à une région centrale du déflecteur.

L'invention a également pour objet un véhicule automobile comprenant un dispositif aérodynamique ayant tout ou partie des caractéristiques précédentes.

### Exposé de l'invention :

L'invention sera mieux comprise à la lecture de la description suivante d'un exemple non limitatif de l'invention, et à la lumière des dessins annexés sur lesquels :
- la figure 1 représente une vue en perspective de la partie arrière d'un véhicule automobile comprenant un dispositif aérodynamique selon l'invention, le déflecteur étant en position passive,
- la figure 2 représente une section locale suivant la ligne de coupe A-A du déflecteur et de la zone de carrosserie adjacente de la figure 1,
- la figure 3 est une vue schématique en perspective d'un soufflet apte à actionner le déploiement du déflecteur selon l'invention,
- les figures 4 et 5 sont des sections suivantes la ligne de coupe B-B du déflecteur selon l'invention et de la zone de carrosserie adjacente, le déflecteur étant représenté respectivement en position active et en position passive.

Dans la présente description, les indications de directions sont données en référence à un repère XYZ classiquement utilisé dans la conception automobile, dans lequel X est la direction longitudinale avant-arrière du véhicule, dirigé vers l'arrière, Y est la direction transversale, dirigé vers la droite et Z est la direction verticale dirigé vers le haut.

Le terme « sensiblement » est utilisé pour indiquer qu'un léger écart est admis dans le cadre de l'invention par rapport à une direction ou à une indication nominale donnée. Par exemple « sensiblement vertical » signifie que la composante est essentiellement verticale ; un angle d'environ 20° par rapport à la direction Z peut être admis tout en restant dans le cadre de l'invention.

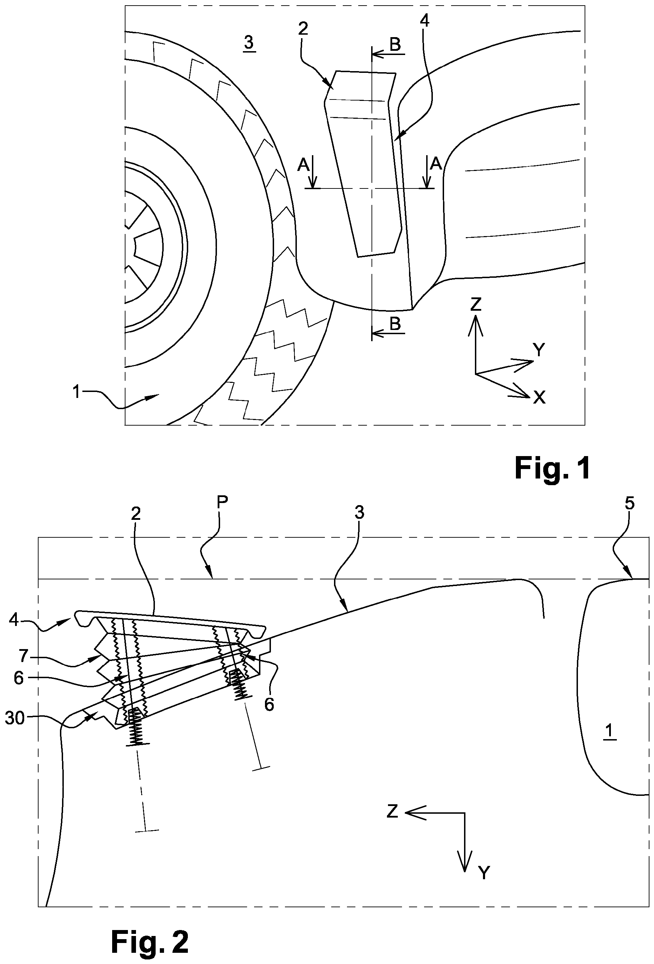

On a représenté à la figure 1 une partie latérale gauche d'un véhicule automobile pourvu d'un dispositif aérodynamique selon l'invention. La zone considérée est située derrière une roue 1 arrière du véhicule. Sur cette figure, la partie avant du véhicule est située vers la gauche tandis que la partie arrière est située vers la droite.

Le dispositif aérodynamique comprend un déflecteur 2 (également appelé « volet » ou « flap » par l'homme de l'art). Ce déflecteur 2 est situé sur une zone de carrosserie 3 latérale du véhicule. La zone de carrosserie 3 s'entend au sens large et peut désigner tout élément de carrosserie métallique ou plastique, par exemple un bouclier arrière du véhicule. Le déflecteur 2 est mobile entre une position passive rétractée et une position active déployée. Dans la position passive rétractée, le déflecteur 2 s'intègre dans la zone de carrosserie 3 de façon à présenter une surface extérieure affleurante et donc en continuité avec la surface adjacente de la zone de carrosserie 3. Le déflecteur 2 se dispose dans une empreinte 30 prévue à cet effet dans la zone de carrosserie 3. Le déflecteur 3 peut être entouré par la zone de carrosserie 3 sur tout son bord périphérique. Dans une variante de réalisation, le déflecteur 2 peut être contigüe à la zone de carrosserie sur deux ou trois bords uniquement de sorte que le déflecteur forme une arête ou un bord arrière saillant y compris lorsqu'il est en position passive.

Comme illustré à la figure 2, le déflecteur 2 comporte un bord arrière 4 (ou arête arrière) sensiblement vertical qui vient affleurer un plan vertical longitudinal P dans la position active déployée. Ce plan vertical est parallèle à la direction longitudinale X du véhicule et est positionné transversalement (suivant Y) en ce qu'il est tangent à un flanc latéral 5 de la roue arrière. Ce flanc 5 est situé du côté extérieur de la roue 1.

Le déflecteur 2 est un élément plat allongé orienté verticalement sur le véhicule.

Le déflecteur 2 est préférentiellement situé en dessous du niveau supérieur de la roue 1. Dans une variante de réalisation non illustrée de l'invention une petite partie du déflecteur peut être située au-dessus de ce niveau étant entendu que la majeure partie est située sous ce niveau.

Le déflecteur 2 est relié à la carrosserie ou la structure du véhicule par des tiges 6 de guidage (figure 2) reliées à la face intérieure du déflecteur 2. Dans l'exemple illustré quatre tiges 6 sensiblement parallèles et agencées selon un carré coulissent dans des évidements ménagés dans la zone de carrosserie 3.

Le dispositif de l'invention comprend des moyens pneumatiques (non représentés) pour commander le déplacement du déflecteur 2 de sa position passive à sa position active. Ces moyens pneumatiques peuvent être communs avec des moyens pneumatiques embarqués dans le véhicule pour piloter ou corriger l'assiette du véhicule ; un véhicule dont l'aérodynamisme est particulièrement optimisé inclura en effet des moyens d'adaptation de la garde au sol aux conditions de circulation et à la vitesse du véhicule. Un tel véhicule tirera avantageusement profit de la pression de service des suspensions pilotées (environ 16 bars) pour provoquer le déploiement du déflecteur 2.

Le dispositif de l'invention comprend une chambre pneumatique fermée par un soufflet 7 extensible (figures 2 à 4), interposé entre la face intérieure du déflecteur 2 et la zone de carrosserie 3. L'air sous pression arrive directement dans cette chambre pour actionner le déploiement du soufflet 7 et provoquer le déplacement du déflecteur 2 jusqu'à sa position active.

Dans l'exemple illustré, le dispositif comprend quatre tiges de guidage 6, dont deux tiges avant et deux tiges arrière (figure 2). Les deux tiges arrière ont des courses supérieures à celles des tiges avant de sorte que le déflecteur 2 pivote d'un angle déterminé lorsqu'il passe de la position passive à la position active. Il est essentiel que le bord avant du déflecteur 2 ne franchisse pas le plan P défini précédemment.

Des moyens de rappel 8 constitués de ressorts hélicoïdaux sont placés autour des tiges 6 de guidage. Chaque ressort coopère en appui d'une part contre une paroi fixe de la carrosserie et/ou de la structure et d'autre part avec une collerette d'extrémité de la tige 6 de guidage associée. Cette extrémité est à l'opposé du déflecteur 2. En l'absence de pression suffisante dans la chambre, les moyens de rappel 8 tendent à rétracter les tiges 6 dans la carrosserie en repoussant les collerettes, de façon à repositionner le déflecteur 2 dans la position passive.

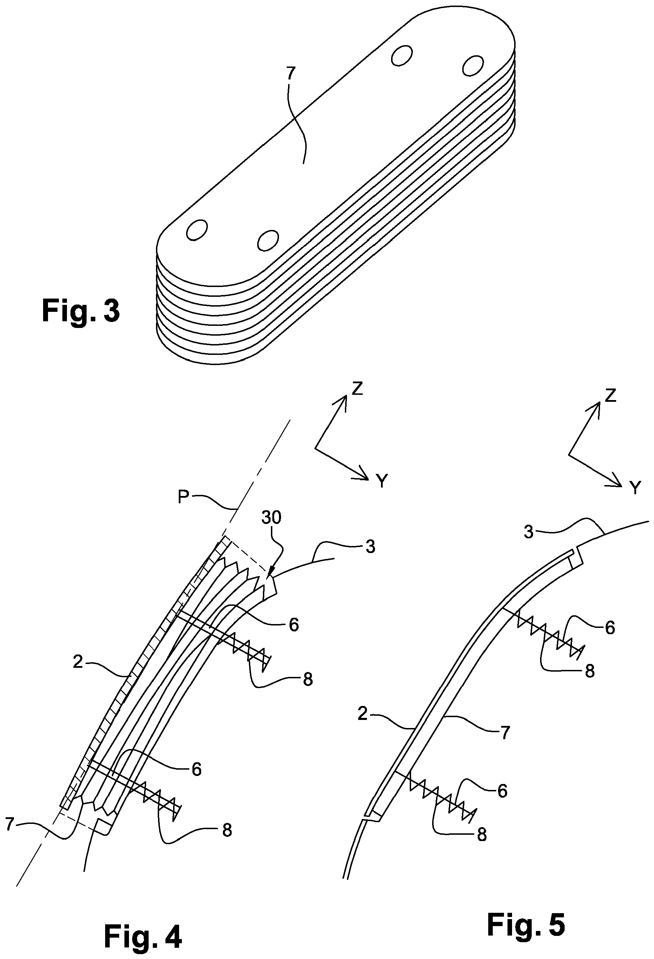

Lorsque le déflecteur 2 est dans la position passive, le soufflet est comprimé et complètement escamoté dans l'empreinte 30 (figures 1 et 5).

La position active correspond à une position de butée. A cet effet, les ressorts hélicoïdaux 8 ont des spires jointives pour limiter la course des tiges 6 de guidage lorsque le déflecteur 2 est dans la position active.

Selon un autre aspect de l'invention illustré aux figures 4 et 5, le déflecteur 2 a une section verticale déformable entre d'une part une forme incurvée (figure 5) correspondant à une forme convexe de la zone de carrosserie 3, et d'autre part une forme sensiblement plane (figure 4) de façon à présenter un bord arrière sensiblement rectiligne. Ces formes correspondant respectivement aux positions passive et active du déflecteur 2. Le soufflet 7 comprend au moins une zone d'extrémité supérieure ayant des conformations permettant une amplitude de déploiement plus importante dans cette zone supérieure par rapport à une région centrale du déflecteur 2. Ces conformations sont constituées par exemple d'un plus grand nombre de plis dans la zone d'extrémité supérieure ou, en variante, de bandes pliées de plus grande largeur dans cette zone (comparé à la zone centrale).

On note que les tiges 6 peuvent traverser le soufflet 7 de part en part comme illustré sur les figures. Dans ce cas, le soufflet 7 forme une enveloppe autour des tiges et empêche la pénétration de poussières et salissures dans l'espace situé entre le déflecteur 2 et la carrosserie. Le soufflet ferme également cet espace visuellement, ce qui procure un meilleur rendu esthétique et une impression de qualité.

Dans un autre mode de réalisation non illustré, les tiges peuvent être disposées autour du soufflet 7.

Bien entendu, l'invention n'est pas limitée aux modes ou variantes de réalisation décrits précédemment et comprends tous les équivalents techniques de ces moyens.

## Revendications

1. Dispositif aérodynamique d'un véhicule automobile, comprenant un déflecteur (2) situé sur une zone de carrosserie (3) latérale et derrière une roue (1) arrière du véhicule, le déflecteur (2) étant mobile entre une position passive rétractée s'intégrant dans la zone de carrosserie (3) et une position active déployée dans laquelle un bord arrière (4) sensiblement vertical du déflecteur (2) affleure un plan vertical longitudinal (P) délimitant un flanc (5) latéral extérieur de la roue (1), **caractérisé en ce qu'**il comprend des moyens pneumatiques pour commander le déplacement du déflecteur (2) de sa position passive à sa position active, ce déplacement étant réalisé à l'encontre de moyens de rappel (8) permettant de ramener le déflecteur (2) dans la position passive, le dispositif comprenant également une chambre pneumatique fermée par un soufflet (7) extensible, interposée entre la face intérieure du déflecteur (2) et la zone de carrosserie (3)..

2. Dispositif aérodynamique selon la revendication 1, **caractérisé en ce que** le déflecteur (2) est au moins en majeure partie situé en dessous du niveau supérieur de la roue (1).

3. Dispositif aérodynamique selon la revendication 1 ou 2, **caractérisé en ce que** le déflecteur (2) est un élément plat allongé orienté verticalement, le déflecteur (2) étant relié à la carrosserie et/ou à la structure du véhicule par des tiges (6) de guidage reliées à la face intérieure du déflecteur (2), les tiges (6) coulissant dans des évidements ménagés dans la zone de carrosserie (3).

4. Dispositif aérodynamique selon la revendication 3, **caractérisé en ce que** les tiges (6) de guidage comportent des tiges avant et des tiges arrière, les courses des tiges arrière étant supérieures aux courses des tiges avant de sorte que le déflecteur (2) pivote d'un angle déterminé.

5. Dispositif aérodynamique selon la revendication 3 ou 4, **caractérisé en ce que** les moyens de rappel (8) sont constitués de ressorts hélicoïdaux placés autour des tiges de guidage, chaque ressort coopérant en appui d'une part contre une paroi fixe de la carrosserie et/ou de la structure et d'autre part avec une collerette d'extrémité de la tige (6) de guidage associée.

6. Dispositif aérodynamique selon la revendication 5, **caractérisé en ce que** les ressorts hélicoïdaux ont des spires jointives formant butées lorsque le déflecteur (2) est dans la position active.

7. Dispositif aérodynamique selon l'une quelconque des revendications précédentes, **caractérisé en ce que** le déflecteur (2) a une section verticale déformable entre d'une part une forme incurvée correspondant à une forme convexe de la zone de carrosserie (3), et d'autre part une forme sensiblement plane de façon à présenter un bord arrière (4) sensiblement rectiligne, ces formes correspondant respectivement aux positions passive et active du déflecteur (2), le soufflet (7) ayant des conformations dont l'amplitude de déploiement est plus importante à au moins une extrémité supérieure et/ou inférieure du déflecteur (2), comparé à une région centrale du déflecteur.

8. Véhicule automobile **caractérisé en ce qu'**il comprend un dispositif aérodynamique selon l'une quelconque des revendications précédentes.

## Patentansprüche

1. Aerodynamische Vorrichtung eines Kraftfahrzeugs, die ein Leitblech (2) enthält, das sich in einem seitlichen Karosseriebereich (3) und hinter einem Hinterrad (1) des Fahrzeugs befindet, wobei das Leitblech (2) zwischen einer passiven eingezogenen Stellung, die sich in den Karosseriebereich (3) integriert, und einer aktiven ausgefahrenen Stellung beweglich ist, in der ein im Wesentlichen senkrechter hinterer Rand (4) des Leitblechs (2) mit einer senkrechten Längsebene (P) fluchtet, die eine äußere Seitenflanke (5) des Rads (1) begrenzt, **dadurch gekennzeichnet, dass** sie pneumatische Einrichtungen enthält, um die Verschiebung des Leitblechs (2) von seiner passiven Stellung in seine aktive Stellung zu steuern, wobei diese Verschiebung gegen Rückstelleinrichtungen (8) erfolgt, die es ermöglichen, das Leitblech (2) in die passive Stellung zurückzubringen, wobei die Vorrichtung ebenfalls eine von einem dehnbaren Faltenbalg (7) verschlossene pneumatische Kammer enthält, die zwischen die Innenseite des Leitblechs (2) und den Karosseriebereich (3) eingefügt ist.

2. Aerodynamische Vorrichtung nach Anspruch 1, **dadurch gekennzeichnet, dass** das Leitblech (2) sich zumindest zum größten Teil unter dem oberen Bereich des Rads (1) befindet.

3. Aerodynamische Vorrichtung nach Anspruch 1 oder 2, **dadurch gekennzeichnet, dass** das Leitblech (2) ein senkrecht ausgerichtetes, längliches flaches Element ist, wobei das Leitblech (2) mit der Karosserie und/oder der Struktur des Fahrzeugs durch Führungsstangen (6) verbunden ist, die mit der Innenseite des Leitblechs (2) verbunden sind, wobei die Stangen (6) in Aussparungen gleiten, die im Karosseriebereich (3) ausgespart sind.

4. Aerodynamische Vorrichtung nach Anspruch 3, **dadurch gekennzeichnet, dass** die Führungsstangen (6) vordere Stangen und hintere Stangen aufweisen, wobei die Wege der hinteren Stangen größer sind als die Wege der vorderen Stangen, damit das Leitblech (2) um einen bestimmten Winkel schwenkt.

5. Aerodynamische Vorrichtung nach Anspruch 3 oder 4, **dadurch gekennzeichnet, dass** die Rückstelleinrichtungen (8) aus Schraubenfedern bestehen, die um die Führungsstangen herum angeordnet sind, wobei jede Feder in Auflage einerseits gegen eine ortsfeste Wand der Karosserie und/oder der Struktur und andererseits mit einem Endkragen der zugeordneten Führungsstange (6) zusammenwirkt.

6. Aerodynamische Vorrichtung nach Anspruch 5, **dadurch gekennzeichnet, dass** die Schraubenfedern aneinandergrenzende Windungen haben, die Anschläge bilden, wenn das Leitblech (2) in der aktiven Stellung ist.

7. Aerodynamische Vorrichtung nach einem der vorhergehenden Ansprüche, **dadurch gekennzeichnet, dass** das Leitblech (2) einen senkrechten Abschnitt hat, der zwischen einerseits einer gekrümmten Form, die einer konvexen Form des Karosseriebereichs (3) entspricht, und andererseits einer im Wesentlichen ebenen Form verformbar ist, um einen im Wesentlichen geradlinigen hinteren Rand (4) aufzuweisen, wobei diese Formen je der passiven bzw. aktiven Stellung des Leitblechs (2) entsprechen, wobei der Faltenbalg (7) Gestaltungen hat, deren Ausbreitungsamplitude an mindestens einem oberen und/oder unteren Ende des Leitblechs (2) größer ist, verglichen mit einem zentralen Bereich des Leitblechs.

8. Kraftfahrzeug, **dadurch gekennzeichnet, dass** es eine aerodynamische Vorrichtung nach einem der vorhergehenden Ansprüche enthält.

## Claims

1. Aerodynamic device of a motor vehicle, comprising a deflector (2) situated on a lateral body area (3) and behind a rear wheel (1) of the vehicle, the deflector (2) being movable between a retracted passive position in which it is integrated into the body area (3) and a deployed active position in which a substantially vertical rear edge (4) of the deflector (2) is flush with a longitudinal vertical plane (P) delimiting an outer sidewall (5) of the wheel (1), **characterized in that** it comprises pneumatic means for controlling the movement of the deflector (2) from its passive position to its active position, this movement being produced counter to return means (8) for returning the deflector (2) into the passive position, the device also comprising a pneumatic chamber closed by extensible bellows (7) and interposed between the inner face of the deflector (2) and the body area (3).

2. Aerodynamic device according to Claim 1, **characterized in that** the deflector (2) is at least for the most part situated below the upper level of the wheel (1).

3. Aerodynamic device according to Claim 1 or 2, **characterized in that** the deflector (2) is a vertically oriented elongate flat element, the deflector (2) being connected to the body and/or to the structure of the vehicle by guide rods (6) connected to the inner face of the deflector (2), the rods (6) sliding in clearances formed in the body area (3).

4. Aerodynamic device according to Claim 3, **characterized in that** the guide rods (6) comprise front rods and rear rods, the travels of the rear rods being greater than the travels of the front rods such that the deflector (2) pivots by a defined angle.

5. Aerodynamic device according to Claim 3 or 4, **characterized in that** the return means (8) are constituted by helical springs placed around the guide rods, each spring cooperating by bearing, on the one hand, against a fixed wall of the body and/or of the structure and, on the other hand, with an end collar of the associated guide rod (6).

6. Aerodynamic device according to Claim 5, **characterized in that** the helical springs have contiguous turns forming stops when the deflector (2) is in the active position.

7. Aerodynamic device according to any one of the preceding claims, **characterized in that** the deflector (2) has a vertical section deformable between, on the one hand, a curved shape corresponding to a convex shape of the body area (3) and, on the other hand, a substantially planar shape so as to have a substantially rectilinear rear edge (4), these shapes respectively corresponding to the passive and active positions of the deflector (2), the bellows (7) having conformations whose deployment amplitude is greater at at least one upper and/or lower end of the deflector (2), compared with a central region of the deflector.

8. Motor vehicle, **characterized in that** it comprises an aerodynamic device according to any one of the preceding claims.
